# EUROPEAN PATENT SPECIFICATION

(11) **EP 0 925 857 B1**
(45) Date of publication and mention of the grant of the patent: **11.05.2005**
(21) Application number: 98302350.8
(22) Date of filing: 27.03.1998
(51) Int. Cl.: B21H 5/02, B23P 15/14, B21K 1/30, F16H 55/17, F16D 23/04

(54) **Method of manufacturing a speed gear**
Verfahren zur Herstellung eines Getrieberades
Procédé de fabrication d'une roue dentée de transmission

(30) Priority: 26.12.1997 JP 36790197
(43) Date of publication of application: 30.06.1999
(73) Proprietor: Metalart Corporation, Kusatsu-shi, Shiga Pref. (JP)
(72) Inventor: Hasegawa, Heiichi, Hikone-Shi, Shiga Pref. (JP)
(74) Representative: Marles, Alan David

(56) References cited:
- EP-A- 0 761 340
- US-A- 3 678 557
- US-A- 4 938 089
- PATENT ABSTRACTS OF JAPAN vol. 014, no. 271 (M-0983), 12 June 1990 (1990-06-12) -& JP 02 080146 A (HONDA MOTOR CO LTD), 20 March 1990 (1990-03-20)
- PATENT ABSTRACTS OF JAPAN vol. 012, no. 371 (M-748), 5 October 1988 (1988-10-05) -& JP 63 120958 A (GOTO TANKO KK), 25 May 1988 (1988-05-25)
- PATENT ABSTRACTS OF JAPAN vol. 1997, no. 04, 30 April 1997 (1997-04-30) -& JP 08 323443 A (MUSASHI SEIMITSU IND CO LTD), 10 December 1996 (1996-12-10)
- DATABASE WPI Section PQ, Week 198511 Derwent Publications Ltd., London, GB; Class P52, AN 1985-067169 XP002162985 -& SU 1 107 942 A (MINSK TECHN DES INS), 15 August 1984 (1984-08-15)

## Description

### BACKGROUND OF THE INVENTION

The present invention relates to a method of manufacturing a speed gear according to the preamble of claim 1. Such a method is disclosed in US-A-4,938,089.

Conventionally, a speed gear having section of speed gear and section of clutch spline used for the transmission of gearbox is manufactured by such methods as:
① A method which comprises the steps of forming section of speed gear and teeth of spline respectively by submitting section of speed gear and section of clutch spline, integrally molded by hot forging, to machining such as hobbing, etc.
② A method which comprises the steps of forming section of speed gear by submitting section of speed gear molded by hot forging to machining such as hobbing, etc. and integrating such section of speed gear and section of clutch spline having teeth of spline molded by cold forging by either spline connection or electron beam welding.
③ A method which comprises the steps of forming section of speed gear by submitting section of speed gear and section of clutch spline integrally molded by hot forging to machining such as hobbing, etc. and forming section of clutch spline by hot forging and cold forging respectively.

By the way, said methods ① to ③ all consist in forming section of speed gear by submitting section of speed gear to machining such as hobbing, etc. and, for that reason, had a problem that the metal flow of the section of speed gear is cut off, not only reducing the strength of the gear but also inevitably leading to an increase of manufacturing cost due to machining.

As a solution to this problem, adoption of a method for forming teeth of speed gear in the section of speed gear by cold forging with press may be conceivable, but no high-accuracy section of speed gear could be manufactured because of the difficulty of securing concentricity between the section of clutch spline and the section of speed gear forming teeth of speed gear.

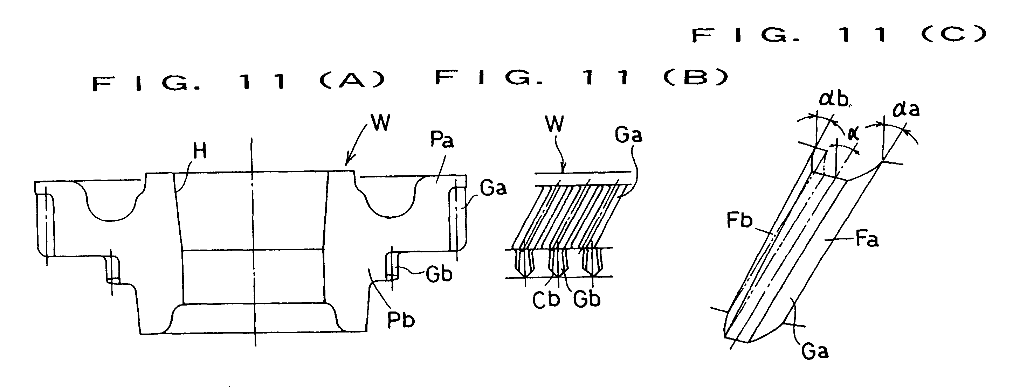

Moreover, the speed gear W generally used for the transmission of gearbox at present is provided, as shown in Fig. 11, with section of speed gear Pa and section of clutch spline Pb, forming helical teeth Ga as teeth of speed gear at the section of speed gear Pa and involute spline with back taper Gb having chamfer Cb at the tip of the section of clutch spline Pb respectively.

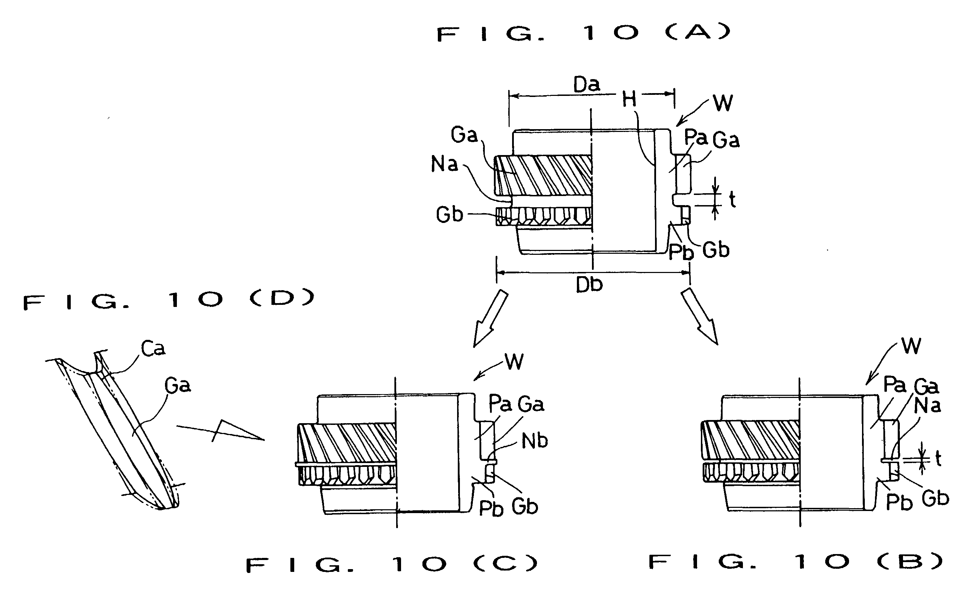

The helical teeth Ga formed at the section of speed gear Pa generally have, as shown in Fig. 10 (C), a torsional angle α of 15° to 35° on the right or on the left, and are formed as high teeth to reduce the gear noise produced at the time of high-speed rotation of the speed gear W.

For that reason, in the case where an attempt is made to form helical teeth Ga by cold forging with press, for example, the greater part of the forming pressure must be supported by the tooth flank Fa of the helical teeth Ga, and this causes deflection of the helical teeth Ga, producing a gap in the tooth flank Fb and inducing the material to flow into that gap.

As a result, the helical teeth Ga are formed differently at the torsional angle αa of the tooth flank Fa and the torsional angle αb of the tooth flank Fb, making it difficult to manufacture speed gear of high accuracy. In addition, since this trend becomes particularly conspicuous as the torsional angle α gets larger, it was impossible to form helical teeth Ga with a torsional angle α of 30° or over by cold forging with press.

Furthermore, as speed gear W, a type of forming helical teeth Ga having crowning Ca on the tooth flank (see Fig. 10 (D)), at the section of speed gear Pa is also adopted, but this crowning could not be formed by cold forging with press.

### SUMMARY OF THE INVENTION

In view of said problems inherent in conventional speed gears and their manufacturing method, the object of the present invention is to provide an improved method of manufacturing a speed gear having a section of speed gear and a section of clutch spline, including teeth of the speed gear and an involute spline with a back taper having a chamfer at the tip.

According to the present invention there is provided a method of manufacturing a speed gear, comprising the steps of integrally molding, by either hot or warm forging, a section of speed gear and a section of clutch spline, rough-forming teeth of the speed gear in said section of speed gear and an involute spline parallel to the axial line of the gear in the section of clutch spline respectively, forming said involute spline parallel to the axial line of gear formed on the section of clutch spline, by cold forging, into an involute spline with a back taper having a chamfer at the tip, and then finish forming said teeth of the speed gear formed at the section of speed gear, characterized in that said finish forming of the teeth of speed gear is made by forming said teeth of the speed gear by means of rolling dies, by cold forging, while turning them around the shaft hole perforated with reference to the section of clutch spline forming said involute spline with a back taper.

Preferably, the manufacturing method may be such as to form crowning on the tooth flank of the teeth of speed gear, by means of rolling dies.

Preferably, said forming of an involute spline with a back taper may be performed by pushing in dies, radially disposed against the axial line of the gear among teeth of spline parallel to the axial line of the gear formed at the section of clutch spline, toward the center of the gear in the direction perpendicular to the axial line of the gear, in a shape conformable to the tip shape of said dies.

To achieve this method, the manufacturing apparatus can comprise a chucking means for holding apparatus can comprise a chucking means for holding the shaft hole pierced at the center of the work gear, a tail stock for turning said work gear, through the chucking means, around its shaft hole, a synchronizing gear disposed in the tail stock that turns together with the tail stock, a driven gear engaging with said synchronizing gear, and a rolling spindle on which are disposed rolling dies, said work gear being submitted to finish the forming of teeth of speed gear rough-formed in advance on the section of speed gear of said work gear, by means of said rolling dies turning in synchronization with said work gear, while turning said work gear around its shaft hole, through said synchronizing gear and driven gear.

In some cases, the chucking means may comprise a collet chuck and a male cone to be inserted in the collet chuck so as to expand the diameter of the collet chuck and hold the shaft hole pierced at the center of the work gear.

Moreover, the rolling dies may be constructed in a way to perform finish forming of helical teeth rough-formed in advance at the section of speed gear of the work gear.

Furthermore, the rolling dies may be constructed in a way to also perform crowning at the tooth flank of the teeth of speed gear rough-formed in advance at the section of speed gear of the work gear.

According to the present invention, it becomes possible to integrally form, by forging, a section of speed gear and a section of clutch spline including teeth of speed gear and an involute spline with a back taper having a chamfer at the tip, thus providing the following actions and effects:
1) By forming teeth of speed change gear and an involute spline with a back taper having a chamfer at the tip, by means of forging, it becomes possible to improve the strength of the gear without cutting the metal flow of the teeth, avoiding an increase of manufacturing cost due to machining, and reducing the manufacturing cost of speed gear.
2) It is easy to concentrically secure the section of clutch spline forming an involute spline with a back taper with the section of speed gear forming teeth of speed gear, enabling the manufacture of highly-accurate speed gear.
3) When forming helical teeth as teeth of speed gear, it is possible to manufacture highly-accurate speed gear, especially helical teeth with a torsional angle of 30° or more, by forging.
4) When forming teeth of speed gear by forging, it is possible to also perform crowning at the tooth flank of the teeth of speed gear at the same time.
5) By forming an involute spline with a back taper having a chamfer at the tip by forging, it becomes possible to not only manufacture highly-accurate speed gear without hooking due to machining, but to also obtain speed gear with excellent shift feeling.
6) Absence of restrictions on the component materials of speed gear enables the use of high-strength, difficult to cut steel, making it possible to manufacture compact speed gear easily.
7) It is possible to manufacture speed gear with a shape difficult to achieve through machining, and obtain compact speed gear.

### BRIEF DESCRIPTION OF THE DRAWINGS

Fig. 1 is an explanatory drawing showing the method of manufacturing speed gear according to the present invention,
Fig. 2 is a front sectional view of the apparatus for rough-forming gear used for the manufacture of speed gear according to the method of the present invention,
Fig. 3 is a front sectional view of the apparatus for forming involute used for the manufacture of speed gear according to the method of the present invention,
Fig. 4 shows the lower die of said apparatus for forming involute, (A) being a plan view, and (B) a front elevation of the main part,
Fig. 5 shows the dies of said apparatus for forming involute, (A) being a plan view, (B) a partially broken front elevation, and (C) an explanatory drawing of the die tip,
Fig. 6 is a front sectional view of the flow forming apparatus used for the manufacture of speed gear according to the method of the present invention,
Fig. 7 is an expanded view of the main part of said flow forming apparatus.
Fig. 8 is an explanatory drawing showing the relation between the synchronizing gear and the driven gear,
Fig. 9 is an explanatory drawing showing the relation between the rolling dies and the intermediate product,
Fig. 10 is an explanatory drawing of various kinds of speed gear, and
Fig. 11 shows a typical gear, (A) being a sectional view, (B) an exploded view of the main part, and (C) an expanded explanatory drawing of the teeth of the speed gear.

### DETAILED DESCRIPTION OF THE INVENTION

Explanation will be given hereafter on an embodiment of speed gear and the manufacturing method according to the present invention and also the apparatus therefor based on drawings.

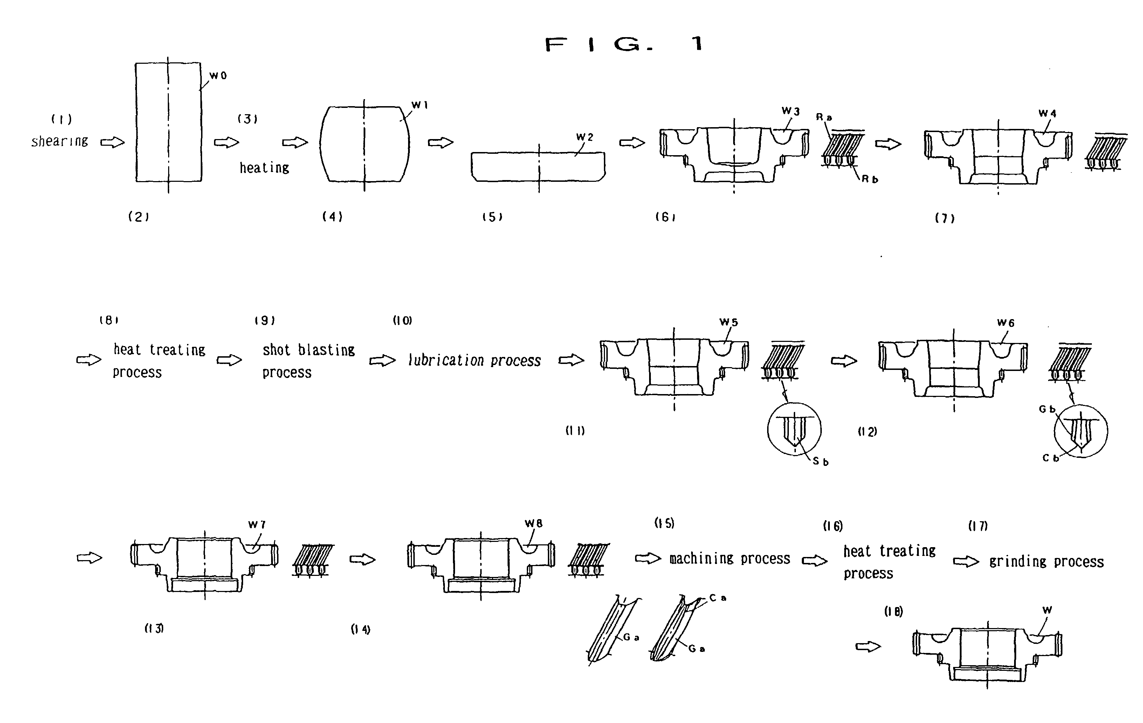

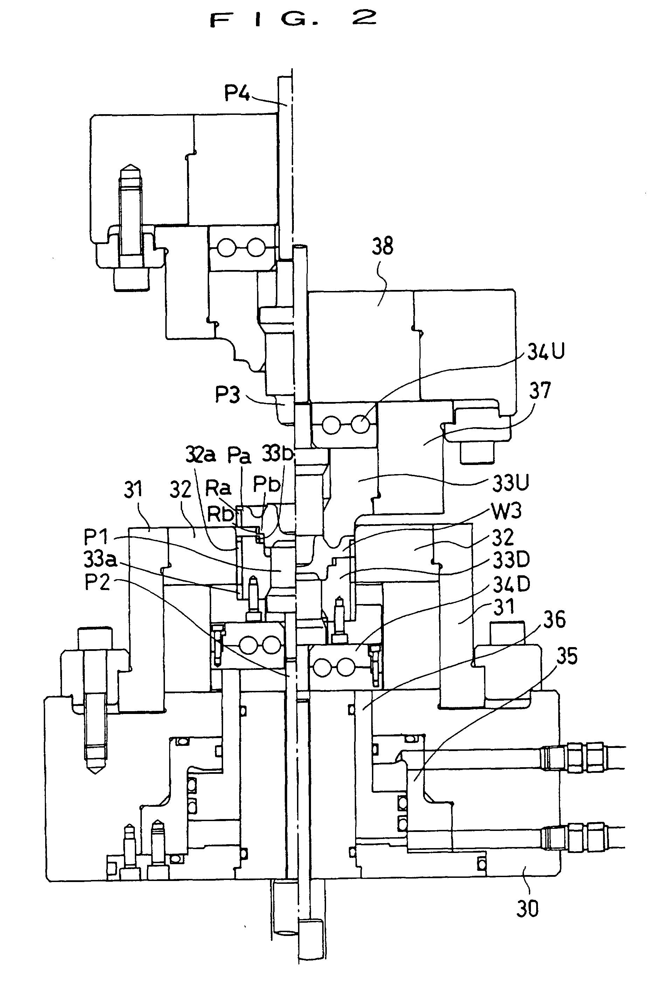

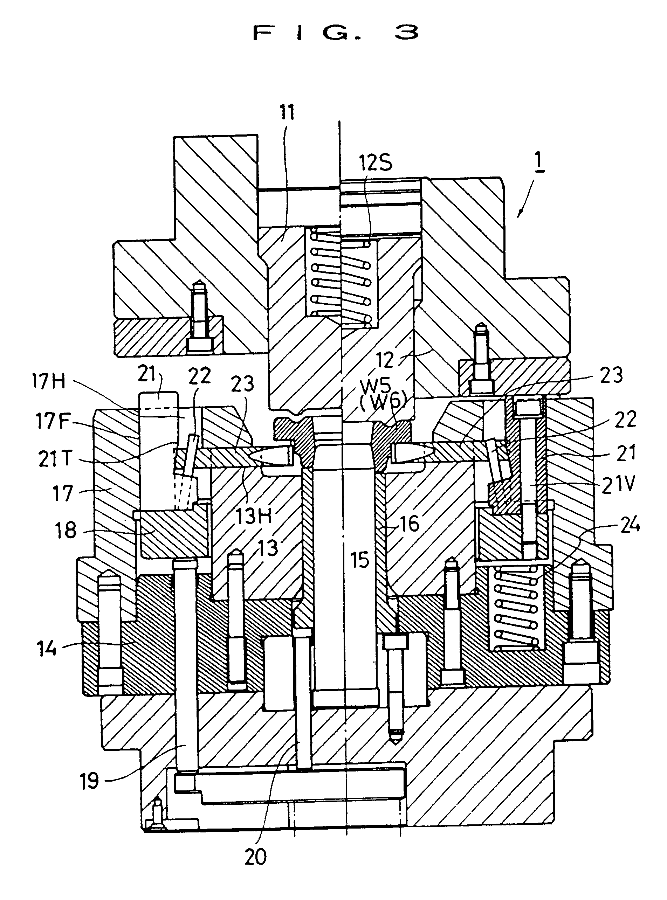

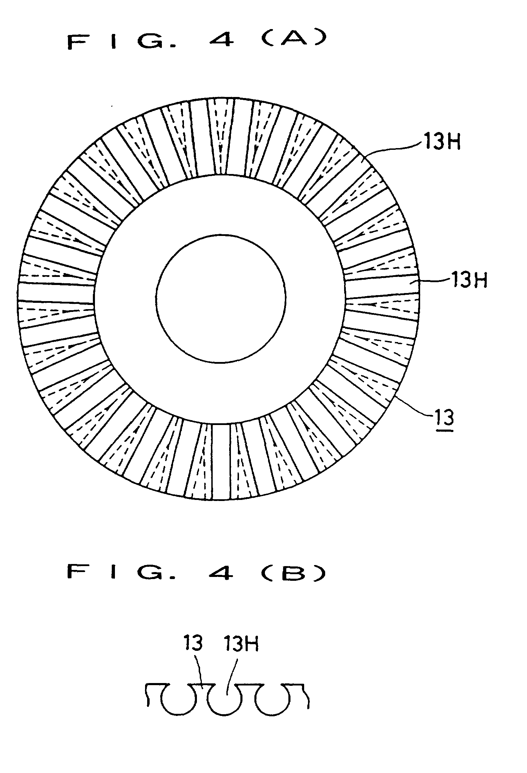

First, the speed gear forming method of the present invention will be explained by using Fig. 1, about a case of forming of the speed gear W of a shape as indicated in Fig. 11 (A), (B).

In the first place, a raw material suitable for the speed gear W to be manufactured is cut at prescribed length by means of a billet shear or a saw (Fig. 1 (1), (2)), and this raw material WO is heated to a temperature suitable for either hot or warm forging (Fig. 1 (3)).

In this case, materials suitable for speed gear W such as SC steel, SCM steel, SNC steel, SNCM steel, SCR steel, etc. may be used as raw material.

Moreover, the heating temperature may be set depending on type of forging (hot or warm), nature of material, shape, size, etc., at 1150°C to 1200°C, for example.

After the heating, the raw material WO is submitted to a plural number of processes to integrally form section of speed gear Pa and section of clutch spline Pb, and form them into an intermediate product W4, having rough-formed teeth of speed gear Ra at the section of speed gear Pa and rough-formed involute spline Rb at the section of clutch spline Pb parallel to the axial line of the gear respectively.

This hot forging process is usually composed, though not particularly restricted to such construction, of 4 processes i.e. upsetting process (Fig. 1 (4)), blocker process (Fig. 1 (5)), finisher process (Fig. 1 (6)) and piercing process (Fig. 1 (7)).

Among those processes, the upsetting process (Fig. 1 (4)) is a process for forming the raw material W0 into a shape easy for forging, and the material W1 which passed through this process is submitted to the blocker process (Fig. 1 (5)) and the finisher process (Fig. 1 (6), to be described in detail later) to be adjusted into the required general shape and to have required teeth rough-formed on the section of speed gear Pa and the section of clutch spline Pb.

These blocker process (Fig. 1 (5)) and finisher process (Fig. 1 (6)) may further be constructed with a plural number of processes, depending on nature of material W1, shape and size of the intermediate product W1 to be formed, etc.

And, the intermediate product W4 realized by forming a shaft hole H at the center of the intermediate product W3 is obtained with the piercing process (Fig. 1 (7)). The diameter of the shaft hole H shall be formed to be slightly smaller than the final finished dimension.

The intermediate product W4 having required teeth rough-formed on the section of speed gear Pa and the section of clutch spline Pb are submitted, in the heat treating process (Fig. 1 (8)), to heat treatment such as annealing, etc. and, in the shot blasting process (Fig. 1 (9)), the scale adhering to the surface of the intermediate product W4 is removed. And, in the lubrication process (Fig. 1 (10)), required lubrication such as bonderite process, treatment by molybdenum disulfide based lubricant, etc. will be performed, to ensure smooth execution of the subsequent cold forging process.

The intermediate product W4 which passed through the lubrication process (Fig. 1 (10)) will be submitted, in the cold coining process (Fig. 1 (11)), to finish forming of involute spline Rb parallel to the axial line of the gear rough-formed at the section of clutch spline Pb, and then, in the involute spline forming process (Fig. 1 (12), to be described in detail later), the involute spline Sb parallel to the axial line of the gear formed at the section of clutch spline Pb will be formed in the involute spline Rb in a back tapered shape.

The intermediate product W6 which passed through the involute spline forming process (Fig. 1 (12)) will be submitted, in the machining process (Fig. 1 (13)), to lathe turning of the end face of the intermediate product W6, the inner circumferential surface of the shaft hole H and other parts, with reference to the section of clutch spline Pb having involute spline with back taper Gb formed in the final finished dimensions.

The intermediate product W7 which passed through the machining process (Fig. 1 (13)) will be passed on to the teeth of speed gear forming process (Fig. 1 (14), to be described in detail later), where the teeth of speed gear Ra formed at the section of speed gear Pa are finish formed into teeth of speed gear Ga, while turning around the shaft hole H.

At that time, crowing Ca may be formed at the same time on the tooth flank of the teeth of speed gear Ra.

The intermediate product W8 which passed through the teeth of speed gear forming process (Fig. 1 (14)) will be submitted, in the machining process (Fig. 1 (15)), to lathe turning of the outer circumference, end face and other parts of the section of speed gear Pa, and then, in the heat treating process (Fig. 1 (16)), to required heat treatments such as carbo-hardening, tempering, etc. and, by further passing through the grinding process (Fig. 1 (17)), worked into speed gear W as final product.

Next, the finisher process (Fig. 1 (6)) will be described in detail hereafter.

The finisher process consists in integrally forming section of speed gear Pa and involute spline with back taper Pb, on the intermediate product W2 arranged in the required general shape by the blocker process (Fig. 1 (5)) of either hot or warm forging process, and rough-forming teeth of speed gear Ra at the section of speed gear Pa and rough formed involute spline Rb parallel to the axial line of the gear at the involute spline with back taper respectively.

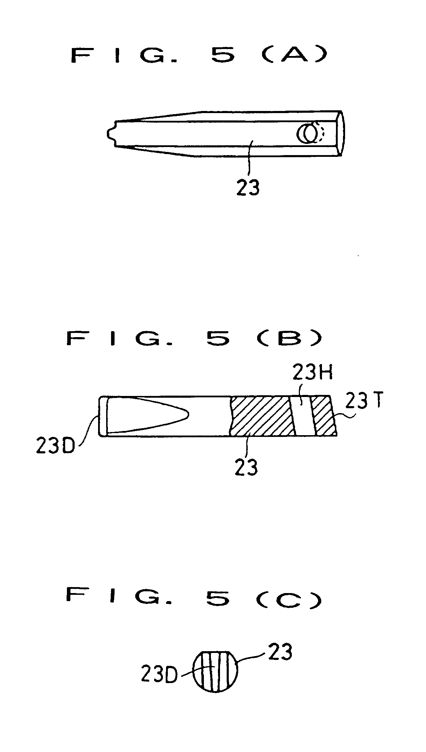

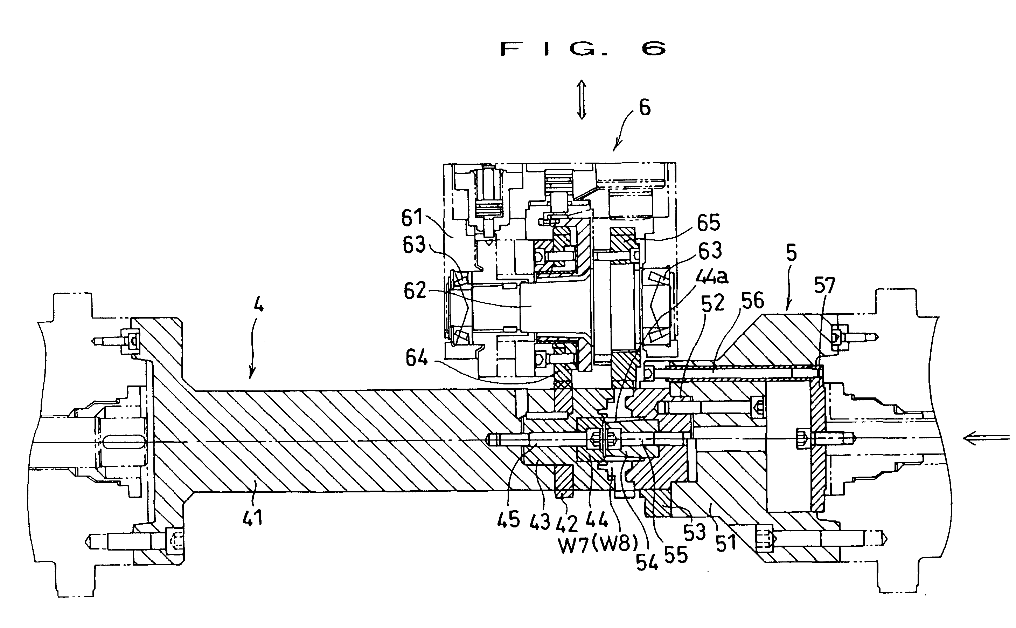

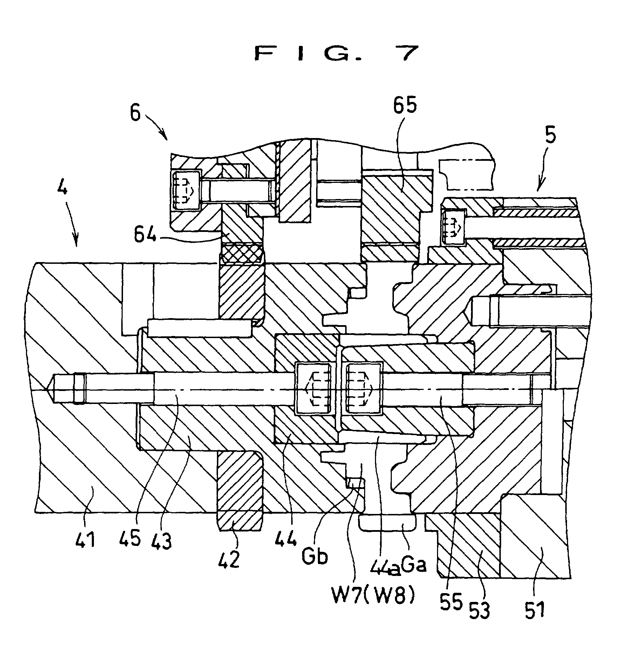

Fig. 2 indicates an example of apparatus for rough-forming gear used for executing this finisher process.

This apparatus for rough-forming gear 3 is designed to simultaneously rough-form helical teeth Ra as teeth of speed gear at the section of speed gear Pa and involute spline Rb parallel to the axial line of the gear at the section of clutch spline Pb, and its structure will be explained hereafter.

A die mounting stand 31 is attached on the base 30, and the die 32 for forming gear is mounted on this die mounting stand 31.

The die 32 for forming gear, formed in a cylindrical shape, is provided, at its inner circumferential surface, with forming teeth 32a corresponding to the helical teeth Ra to be formed at the section of speed gear Pa of the intermediate product W2.

Moreover, in the die 32 for forming gear will be inserted, from above and below respectively, the upper punch 33U and the lower punch 33D which produce plastic deformation by holding and pressing the intermediate product W2 from above and below. In this case, (the die 32 for forming gear) will be constructed in such a way that, as the die 32a for forming gear of the die 32 for forming gear and the driven teeth 33a formed at the outer circumference of the lower punch 33D engage with each other and the lower punch 33D moves in the die 32 for forming gear, the lower punch 33D turns according to that amount of movement.

The upper and lower punches 33U, 33D are formed in a shape capable of forming the intermediate product W2 into the intermediate product W3 by producing plastic deformation in the intermediate product W2, in collaboration with the die 32 for forming gear. The lower punch 33D is further provided, at its inner circumferential surface at the top, with forming teeth 33b corresponding to the involute spline Rb parallel to the axial line of the gear to be formed at the section of clutch spline Pa of the intermediate product W2.

The upper and lower punches 33U, 33D are rotatably supported through upper and lower bearing plates 34U, 34D, and the upper punch 33U is made to go up and down by means of a lifter 38 through upper punch mounting base 37 while the lower punch 33D is made to go up and down by means of a piston 36 moving as hydraulic operating fluid is fed into a hydraulic cylinder 35, respectively.

The lower punch 33D, in which lower knockout pin P1 is inserted, is operated by knockout pin P2 passing through the base 30, while the upper punch 33U, in which upper knockout pin P3 is inserted, is operated by knockout pin P4 passing through the lifter 38.

Next, explanation will be given on the motions of this apparatus for rough-forming gear 3.

The intermediate product W2 is placed on the lower punch 33D and, as the lifter 38 is made to come down, the intermediate product W2 is held and pressed between the upper punch 33U and the lower punch 33D to produce plastic deformation, and rough-form helical teeth Rb at the section of speed gear Pa and involute spline Rb parallel to the axial line of the gear at the section of clutch spline Pb at a time.

After that, hydraulic operating fluid is supplied into the hydraulic cylinder 35, to make the piston 36 go up and push up the lower punch 33D. In this case, the piston 36 is made to go up until the formed intermediate product W3 is detached from the gear die 32.

At that time, as the lower punch 33D moves in the gear die 32, the lower punch 33D turns in proportion to the amount of that movement, and the formed intermediate product W3 also turns at the same time, because the forming teeth 32a of the gear die 32 is engaged with the driven teeth 33a formed on the outer circumferential surface of the lower punch 33D. This makes it possible to take out the intermediate product W3 without causing damage to the helical teeth Ra and the involute spline Rb parallel to the axial line of the gear formed respectively at the section of speed gear Pa and the section of clutch spline Pb of the intermediate product W3.

Namely, to take out the intermediate product W3, the lifter 38 is made to go up to release the holding of the intermediate product W3 by the upper punch 33U and the lower punch 33D, and then the piston 36 of the hydraulic cylinder 35 is made to go up to detach the helical teeth Ra formed at the section of speed gear Pa of the intermediate product W3, from the forming teeth 32a of the gear die 32. After that, the lower knockout pin P1 is made to protrude through the knockout pin P2, and the upper knockout pin P3 is made to protrude through the knockout pin P4, to detach the involute spline Rb parallel to the axial line of the gear formed at the section of clutch spline Pb of the intermediate product W3, from the forming teeth 33b of the lower punch 33D, and then release the intermediate product W3 from the upper and lower punches 33U, 33D.

Next, the involute spline forming process in Fig. 1 (12) will be explained in detail.

The involute spline forming process consists in performing, in the cold coining process (Fig. 1 (11)), finish forming of the involute spline Rb parallel to the axial line of the gear rough-formed at the section of clutch spline Pb, and then forming, on this intermediate product W5, the involute spline parallel to the axial line of the gear formed at the section of clutch spline Pb into involute spline with back taper Gb.

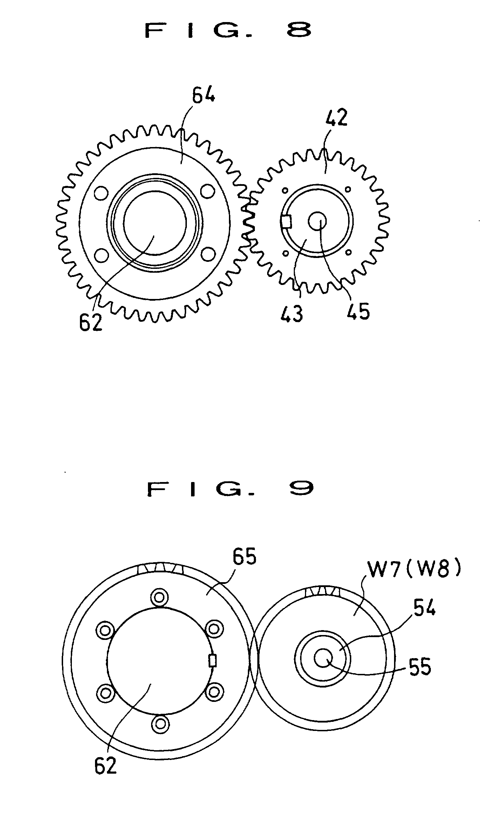

Fig. 3 to Fig. 5 indicate an example of the apparatus for forming involute spline used for executing this involute spline forming process.

This apparatus for forming involute spline 1, designed to form involute spline parallel to the axial line of the gear formed at the section of clutch spline Pb into involute spline with back taper Gb, is constructed as explained hereafter.

The upper die 11 is disposed on the upper die mounting base 12, in a way to be urged downwardly by a spring 12S.

The lower die 13 opposed to this upper die 11 is fixed on the lower die mounting base 14, a punch 15 is disposed on this lower die mounting base 14 through the lower die 13, and outside this punch 15 is disposed a knockout cylinder 16 in cylindrical shape operated with a knockout pin 20. Moreover, a cylindrical case 17 is fixed to the lower die mounting base 14, and on the case 17 are formed, at prescribed pitch, cam inserting holes 17H agreeing with the angle between teeth and the number of teeth of the involute spline Gb, for forming the involute spline Sb parallel to the axial line of the gear, formed at the section of clutch spline Pb, into involute spline with back taper Gb, while the outer side face of these cam inserting holes 17H is formed into a cam supporting face 17F and the cam 21 is inserted in the cam inserting holes 17H respectively.

The cam 21 inserted in the cam inserting holes 17H is supported on the lower die mounting base 14 through a spring 24, supported by a circular flange 18 operated with a knockout pin 19, and fixed to this circular flange 18 by means of a bolt 21V.

In that case, the length of the knockout pin 19 and the knockout pin 20 is set in such a way that the knockout pin 20 pushes up the knockout cylinder 16, after the knockout pin 19 pushed up the flange 18.

The cam 21, the back face of which is finished at high accuracy to be in slide contact with the cam supporting face 17F of the case 17, has a pin 22 on the inner side at its lower part provided in projection in such a way that the top end side of the pin 22 inclines inward, while a die pressing face 21T having a tilt angle equal to the inclination of this pin 22 is formed on the inner side face, facing the pin 22.

At the top of the lower die 13 are formed, as shown in Fig. 4, die inserting holes 13H agreeing with the angle between teeth and the number of teeth of the involute spline with back taper Gb, toward the center of the lower die 13.

The die inserting hole 13H has a section about circular and has its top cut in the shape of a plane, and in these die inserting holes 13H are inserted dies 23 having a section about circular and having their top cut in the shape of a plane. This enables a construction in which the dies 23 are radially disposed toward the center of the lower die 13, while the case 17 supports the flat part of the dies 23 to prevent turning of the dies 23.

The tip 23D of the die 23 is pressed against the involute spline Sb parallel to the axial line of the gear formed at the section of clutch spline Pb, producing a plastic deformation, and is thus changed into a shape available for forming into involute spline with back taper. Moreover, in the die 23 is drilled a pin inserting hole 23H for inserting the pin 22, and the rear end face 23T of the die 23 is formed into an inclined face corresponding to the die pressing face 21T of the cam 21.

Next, explanation will be given on the motions of this apparatus for forming involute spline 1 hereafter.

The intermediate product W5 is placed on the lower die 13 and, as the upper die mounting base 12 is made to come down, the intermediate product W5 is held between the upper die 11 urged by the spring 12S and the lower die 13, while the top face of the cam 21 is pressed with a drop of the upper die mounting base 12, with a slight delay after the holding of the intermediate product W5.

As a result, the cam 21 and the flange 18 are pushed down, the rear end face 23T of the die 23 is pressed by the die pressing face 21T of the cam 21, while the respective dies 23 slide in the direction toward the center of the lower die 13, namely in the axial direction of the intermediate product W5, and the involute spline Sb parallel to the axial line of the gear formed at the section of clutch spline Pb are formed into involute spline with back taper Gb, with the tip 23D of the die 23.

After that, the upper die mounting base 12 is made to go up, to push up the knockout pin 19 and make the flange 18 go up. This also makes the cam 21 go up but, since the pin 22 provided in projection with an inclination against the cam 21 is inserted in the pin inserting hole 23 of the die 23, the respective dies 23 forcibly slide in the direction opposite to the center of the lower die 13, and the tip 23D of the die 23 is detached from the intermediate product W6 on which is formed the involute spline with back taper Gb.

To take out the intermediate product W6, the tip 23D of the die 23, after being detached from the intermediate product W6 so that the involute spline with back taper Gb formed at the section of clutch spline Pb of the intermediate product W6 may not be damaged by the tip 23D of the die 23, pushes down the knockout pin 20 and makes the knockout cylinder 16 protrude, thus releasing the intermediate product W6 from the lower die 13.

Next, the teeth of speed gear forming process by flow forming in Fig. 1 (14) will be explained in detail hereafter.

The teeth of speed gear forming process by flow forming consists in finish performing, by the involute spline forming process in Fig. 1 (12), teeth of speed gear Ra rough-formed at the section of speed gear Pa into teeth of speed gear Ga, while rotating the intermediate product W7, in which is formed shaft hole H, around the shaft hole H, with reference to the section of clutch spline Pb having involute spline with back taper Gb formed in the final finished dimensions.

Fig. 6 to Fig. 9 show an example of the apparatus for flow forming used for executing the teeth of speed gear forming process by flow forming.

The apparatus for flow forming 7, intended to finish form helical teeth Ra as teeth of speed gear rough-formed at the section of speed gear Pa into helical teeth Ga as teeth of speed gear, is constructed as described below.

The apparatus for flow forming 7 is composed of a tail stock unit 4 alternately rotatable in the normal and reverse directions, a chuck unit 5 for holding the intermediate product W7 in collaboration with this tail stock unit 4, a rolling die unit 6, driven by the rotation of the tail stock unit 4, for finish performing helical teeth Ra rough-formed at the section of speed gear Pa of the intermediate product W7 into helical teeth Ga.

The tail stock unit 4 is constructed by fixing a synchronizing gear 42, a receiving die 43 and a collet chuck 44 by means of a bolt 45 to the tip of the tail stock 41 realized in a way to be alternately rotatable in he normal and reverse directions.

In this case, the synchronizing gear 42 shall be one the teeth of which at least more protrude than the tail stock 41 and the teeth are in phase with the helical teeth Ga to be formed (helical teeth Ra rough-formed at section of speed gear Pa).

Moreover, on the receiving die 43 is formed a concave part in the shape of involute spline corresponding to the involute spline with back taper Gb formed at the section of clutch spline Pb of the intermediate product W7.

The chuck unit 5 is constructed by fixing a clamp die 52 and a male cone 54 to a chuck receiving base 51, disposed in a way to face the tail stock unit 4 with a bolt 55, and fastening a stripper 53 disposed at the outer circumference of the clamp die 52 to a rod 56.

And, as the chuck unit 5 is made to advance, the receiving die 43 of the tail stock unit 4, disposed face to face with the chuck unit 5, and the clamp die 52 of the chuck unit 5 hold the intermediate product W7, by engaging the involute spline with back taper Gb formed at the section of clutch spline Pb of the intermediate product W7 in the concave part in the shape of involute spline formed in the receiving die 43.

This puts the helical teeth Ra rough-formed at section of speed gear Pa of the intermediate product W7 in phase with the synchronizing gear 42.

Moreover, the intermediate product W7 is held accurately around the shaft hole H of the intermediate product W7, because it is held as the male cone 54 of the chuck unit 5 is inserted in the collet chuck 44 of the tail stock unit 4, thus flaring the claw segment 44a of the collet chuck 44.

Furthermore, the stripper 53 is slidably disposed at the outer circumference of the clamp die 52 fixed to the chuck receiving base 51, and fastened to the tip of the rod 56 passing through the chuck receiving base 51, to slidably support the mounting base 57, to which the base end of the rod 56 is fixed, in the axial direction of the chuck receiving base 51.

And, the chuck unit 5 is constructed in such a way as to release, after formation of the helical teeth Ga, the holding of the intermediate product W8 by the receiving die 43 and the clamp die 52, by making the chuck receiving base 51 retreat, and release the intermediate product W8 fit in the clamp die 52, by making the stripper 53 protrude by means of the rod 56.

The rolling die unit 6 is constructed by comprising a movable carriage 61 which traverses against the tail stock 41, a rolling spindle 62 disposed in parallel to the tail stock 41 through bearings 63, 63, a driven gear 64, disposed in the rolling spindle 62 and engaging with the synchronizing gear 42, and a rolling die 65.

Next, the motions of this apparatus for flow forming 7 will be explained hereafter.

As the chuck unit 5 is made to advance, the receiving die 43 of the tail stock unit 4, disposed face to face with the chuck unit 5, and the clamp die 52 of the chuck unit 5 hold the intermediate product W7, and the movable carriage 61 of the rolling die unit 6 traverses against the tail stock 41, to engage the driven gear 64 with the synchronizing gear 42 and engage the rolling die 65 with the helical teeth Ra rough-formed at the section of speed gear Pa of the intermediate product W7.

The intermediate product W7 and the chuck unit 5 are made to rotate with turning of the tail stock 41. In this case, the tail stock 41 preferably makes normal rotation and reverse rotation alternately at prescribed cycles.

On the other hand, the rotation of the tail stock 41 is transmitted, through the synchronizing gear 42, the driven gear 64 and the rolling spindle 62, to the rolling die 65, and this rolling die 65 turns synchronizing with the synchronizing gear 42.

As a result, the intermediate product W7, which is engaged with the rolling die 65, is turned by the tail stock 41 and, while the intermediate product W7 is turning synchronizing with the rolling die 65, the helical teeth Ra rough-formed at its section of speed gear Pa are finish formed into helical teeth Ga by forging with the rolling die 65.

To take out the intermediate product W8 on which are formed helical teeth Ga, the chuck receiving base 51 is made to retreat, to cancel the holding of the intermediate product W8 by the receiving die 43 and the clamp die 52, and release the intermediate product W8 fit in the clamp die 52, by making the stripper 53 protrude by means of the rod 56.

The speed gear and the manufacturing method and apparatus for it according to the present invention have so far been explained, by taking, as example, speed gear W of the form as indicated in Fig. 11 (A), (B), realized in a way to form helical teeth Ga as teeth of speed gear at the section of speed gear Pa, the object of the present invention is not restricted to speed gear of this form but may be modified as required within the range not deviating from its purport.

To be more concrete, the speed gear W forming the subject of the present invention includes speed gear with flat teeth, in addition to speed gear having helical teeth as teeth of speed gear Ga, and further includes speed gear having crowning Ca on the tooth flank of the teeth of speed gear Ga as shown in Fig. 10 (C), (D) (also includes those not having crowning Ca, as a matter of course).

In this case, by suitably selecting the shape of the rolling die 65 of the apparatus for flow forming 7, when finish forming, by forging with rolling die 65, teeth of speed gear Ra, rough-formed at the section of speed gear Pa of the intermediate product W7, into teeth of speed gear Ga, it is possible form crowning Ca on the tooth flank of the teeth of speed gear Ga, at the same time.

Moreover, the speed gear W forming the subject of the present invention includes speed gear in which the tip diameter Db of the back tapered involute spline Gb formed on the section of clutch spline is larger than the root diameter Da of the teeth of speed gear Ga formed on the section of speed gear Pa as indicated in Fig. 10 (B), and the clearance t of the groove Na formed between the section of speed gear Pa and the section of clutch spline Pb is no more than 2mm, as well as speed gear in which a partition Nb is formed between the section of speed gear Pa and the section of clutch spline Pb, as shown in Fig. 10 (C), etc., which were difficult to work with a method of forming teeth of speed gear Ga on the section of speed gear Pa by machining such as hobbing, etc. (Speed gear in which the clearance t of the groove Na formed at the section of speed gear Pa and the section of clutch spline Pb is larger than 2mm, as shown in Fig. 10 (A), is also included naturally.)

## Claims

1. A method of manufacturing a speed gear (W), comprising the steps of integrally molding, by either hot or warm forging, a section of speed gear (Pa) and a section of clutch spline (Pb), rough-forming teeth (Ra) of the speed gear in said section of speed gear (Pa) and an involute spline (Rb) parallel to the axial line of the gear in the section of clutch spline (Rb) respectively, forming said invoiute spline (Rb) parallel to the axial line of gear formed on the section of clutch spline (Pb), by cold forging, into an involute spline with a back taper (Gb) having a chamfer (Cb) at the tip, and then finish forming said teeth (Ra) of the speed gear formed at the section of speed gear, **characterized in that** said finish forming of the teeth (Ra) of speed gear (Ga) is made by forming said teeth of the speed gear by means of rolling dies (65), by cold forging, while turning them around the shaft hole (H) perforated with reference to the section of clutch spline (Pb) forming said involute spline with a back taper (Gb).

2. A method of manufacturing a speed gear, as defined in claim 1, wherein crowning (Ca) is formed on the tooth flank of the teeth (Ra) of speed gear, by means of rolling dies (65).

3. A method of manufacturing a speed gear as defined in claim 1 or 2, wherein said forming of involute spline with a back taper (Gb) is performed by pushing in dies (23), radially disposed against the axial line of the gear (W) among teeth of spline parallel to the axial line of the gear formed at the section of clutch spline (Pb), toward the center of the gear (W) in the direction perpendicular to the axial line of the gear, in a shape conformable to the tip (23D) shape of said dies (23).

## Patentansprüche

1. Verfahren zur Herstellung eines Getrieberades (W), umfassend die folgenden Schritte: Integralformen eines Getrieberadabschnitts (Pa) und eines Kupplungskeilwellenabschnitts (PB) durch Heiß- oder Warmschmieden, Vorbearbeiten von Zähnen (Ra) des Getrieberades in dem genannten Getrieberadabschnitt (Pa) bzw. eines Keilwellenprofils mit Evolventenflanken (Rb) parallel zu der axialen Zahnradlinie im Kupplungskeilwellenabschnitt (Rb), Bilden des genannten Keilwellenprofils mit Evolventenflanken (Rb) parallel zur axialen Zahnradlinie, die am Kupplungskeilwellenabschnitt (Pb) gebildet ist, durch Kaltschmieden zu einem Keilwellenprofil mit Evolventenflanken mit einem Gewindeauslauf (Gb), der an der Spitze eine Abschrägung (Cb) hat, und dann Feinbearbeiten der genannten Zähne (Ra) des Getrieberades am Getrieberadabschnitt, **dadurch gekennzeichnet, dass** das genannte Feinbearbeiten der Zähne (Ra) des Getrieberades (Ga) durch Bilden der genannten Zähne des Getrieberades mithilfe von Walzwerkzeugen (65) durch Kaltschmieden erfolgt, während sie um das Wellenloch (H) gedreht werden, das mit Bezug auf den Kupplungskeilwellenabschnitt (Pb) perforiert ist, wobei das genannte Keilwellenprofil mit Evolventenflanken mit einem Gewindeauslauf (Gb) gebildet wird.

2. Verfahren zur Herstellung eines Getrieberades nach Anspruch 1, bei dem an der Zahnflanke der Zähne (Ra) des Getrieberades mithilfe von Walzwerkzeugen (65) Balligkeit (Ca) gebildet wird.

3. Verfahren zur Herstellung eines Getrieberades nach Anspruch 1 oder 2, bei dem das genannte Bilden des Keilwellenprofils mit Evolventenflanken mit einem Gewindeauslauf (Gb) durchgeführt wird, indem Werkzeuge (23), die an der axialen Linie des Zahnrades (W) unter Keilwellenzähnen, die zu der axialen Linie des Zahnrades parallel sind, die am Kupplungskeilwellenabschnitt (Pb) gebildet ist, radial angeordnet sind, in Richtung auf die Mitte des Zahnrads (W) in der zur axialen Linie des Zahnrads lotrechten Linie in einer mit der Form der Spitze (23D) der genannten Werkzeuge (23) gleichförmigen Form eingeschoben werden.

## Revendications

1. Procédé de fabrication d'une roue dentée de transmission (W), qui comprend les étapes consistant à mouler intégralement, par forgeage à chaud ou à mi-chaud, une section de roue dentée (Pa) et une section de cannelure d'embrayage (Pb), à ébaucher respectivement les dents (Ra) de la roue dentée dans ladite section de roue dentée (Pa) et une cannelure à développante (Rb) parallèle à l'axe de la roue dans la section de cannelure d'embrayage .(Rb), à former, par forgeage à froid, ladite cannelure (Rb) parallèle à l'axe de roue dentée formée sur la section de cannelure d'embrayage (Pb) en une cannelure à développante et conicité à l'arrière (Gb), ayant une pointe chanfreinée (Cb), puis à effectuer le parachèvement desdites dents (Ra) de la roue dentée formées sur la section de la roue dentée, **caractérisé en ce que** ledit parachèvement des dents (Ra) de la roue dentée (Ga) est effectué par façonnage desdites dents de la roue dentée au moyen de matrices de laminage (65), par forgeage à froid, en les faisant tourner autour du trou (H) perforé dans l'arbre, compte tenu de la section de cannelure d'embrayage (Pb) formant ladite cannelure à développante et conicité (Gb) à l'arrière.

2. Procédé de fabrication d'une roue dentée de transmission selon la revendication 1, selon lequel un bombé (Ca) est formé sur le flanc des dents (Ra) de la roue dentée au moyen de matrices de forgeage (65).

3. Procédé de fabrication d'une roue dentée selon la revendication 1 ou 2, selon lequel ladite formation d'une cannelure à développante et conicité à l'arrière (Gb) est obtenue en poussant des matrices (23) disposées radialement contre l'axe de la roue dentée de transmission (W) parmi les dents de cannelure parallèles à l'axe de la roue formée au niveau de la section de cannelure d'embrayage (Pb), vers le centre de la roue dentée de transmission (W), dans la direction perpendiculaire à l'axe de la roue, selon une forme adaptable à la forme de la pointe (23D) desdites matrices (23).
